# EUROPEAN PATENT APPLICATION

(11) **EP 1 935 947 A1**
(43) Date of publication of application: **25.06.2008**
(21) Application number: 06811648.2
(22) Date of filing: 05.10.2006
(51) Int. Cl.: C09C 1/56, C09C 3/04

(54) **WATER-DISPERSIBLE CARBON BLACK PIGMENT AND PROCESS FOR PRODUCING AQUEOUS DISPERSION THEREOF**

(30) Priority: 11.10.2005 JP 2005296384
(71) Applicant: Tokai Carbon Company, Ltd., Minato-ku, Tokyo 107-8636 (JP)
(72) Inventor: NAKATA, Hidenao, Tokyo 1078636 (JP); ARAI, Hironori, Tokyo 1078636 (JP)
(74) Representative: Müller-Wolff, Thomas
(86) International application number: PCT/JP2006/320351
(87) International publication number: WO 2007/043596

(57) **Abstract**

A carbon black aqueous pigment which exhibits excellent water-dispersibility and ink performance, and a method of producing a carbon black aqueous dispersion are disclosed. The carbon black aqueous pigment includes carbon black A having a specific surface area by nitrogen adsorption of 150 m²/g or more, a DBP absorption of 95 cm³/100 g or more, and a tinting strength of 120% or more, and carbon black B having a specific surface area by nitrogen adsorption of less than 150 m²/g, a DBP absorption of less than 95 cm³/100 g, and a tinting strength of 120% or more, the carbon black A and the carbon black B being subjected to surface oxidation and neutralization, at least the carbon black A being atomized, and the carbon black A and the carbon black B being mixed in a weight ratio of 20:80 to 80:20. The method includes oxidizing the carbon black A and the carbon black B individually in an oxidizing agent aqueous solution, followed by neutralization, atomizing at least the carbon black A, purifying the carbon black A and the carbon black B, mixing the carbon black A and the carbon black B in a weight ratio of 20:80 to 80:20, and dispersing the mixture in an aqueous medium.

## Description

### TECHNICAL FIELD

The present invention relates to a carbon black aqueous pigment suitable for an aqueous black ink used for inkjet printers and the like, and a method of producing an aqueous dispersion in which the carbon black aqueous pigment is dispersed.

### BACKGROUND ART

It is difficult to stably disperse carbon black in water at a high concentration due to hydrophobicity and low wettability with water. This is because the surface of carbon black has only a small number of functional groups (e.g., hydrophilic hydrogen-containing functional groups such as a carboxyl group and a hydroxyl group) having high affinity with water molecules. Therefore, attempts have been made to improve the water-dispersibility of carbon black by oxidizing the carbon black to produce hydrophilic functional groups on its surface.

For example, JP-A-48-018186 discloses a method of oxidizing carbon black with a hypohalite aqueous solution. JP-A-57-159856 discloses a method of oxidizing carbon black by low-temperature oxygen plasma. However, it is difficult to uniformly oxidize a large amount of carbon black using low-temperature plasma.

A method of producing an aqueous ink is also known in which the water-dispersibility of moderately oxidized carbon black is improved using a coupling agent or a surfactant (e.g., JP-A-04-189877). However, since the surfactant or the like is oxidized or decomposed due to a change in temperature and a change with time, it is difficult to stably maintain the dispersibility of the carbon black for a long period of time. As a method of surface-treating carbon black while improving dispersibility, a method which finely atomizes carbon black in water using glass beads and oxidizes the carbon black using a hypohalite has been proposed (JP-A-08-319444). However, the effect of atomization using glass beads in water is diminished due to buoyancy.

JP-A-08-003498 discloses a method of producing an aqueous pigment ink which includes water and carbon black having a surface active hydrogen content of 1.5 mmol/g or more, the method including (a) providing acidic carbon black and (b) further oxidizing the acidic carbon black in water using a hypohalite. JP-A-08-319444 discloses a method of producing an aqueous pigment ink including finely dispersing carbon black having an oil absorption of 100 ml/100 g or less in an aqueous medium, and oxidizing the carbon black using a hypohalite.

According to the above methods of producing an aqueous pigment ink, an aqueous pigment ink with excellent water-dispersibility and long-term dispersion stability is obtained by oxidizing carbon black so that the surface of the carbon black has a large number of active hydrogens (i.e., hydrophilic functional groups). On the other hand, the number of hydrophilic functional groups which exist at the contact interface between the surface of the carbon black particles and water molecules is important for dispersing the carbon black in water and maintaining a stable dispersed state. Therefore, it is difficult to accurately determine the dispersibility of carbon black merely based on the number of functional groups per unit weight of carbon black.

The applicant of the present invention focused on the number of hydrophilic hydrogen-containing functional groups per unit surface area of carbon black as a new index for accurately determining dispersibility, and proposed water-dispersible carbon black which is modified by oxidation, wherein the total number of carboxyl groups and hydroxyl groups present on the surface of the carbon black is 3 µeq/m² or more per unit surface area (JP-A-11-148027).

A method of forming hydrophilic functional groups on the surface of the carbon black has a limited effect for improving the water-dispersibility of carbon black and maintaining the dispersion stability for a long period of time. The applicant conducted further research, and found that water-dispersibility and dispersion stability are closely related to the aggregation state of carbon black particles. The applicant proposed water-dispersible carbon black obtained by oxidizing carbon black having a specific surface area by nitrogen adsorption (N₂SA) of 80 m²/g or larger and a DBP absorption of 70 ml/100 g or less, wherein the ratio (Dupa/Dst) of the average particle diameter Dupa (nm) of the agglomerate to the Stokes mode diameter Dst (nm) of the aggregate is 1.5 to 2.0 (JP-A-11-148026).

JP-T-2003-535949 discloses a method of producing a self-dispersible pigment including oxidizing a pigment with ozone in an aqueous environment while subjecting the pigment to at least one dispersive mixing operation at a shear rate of at least 200 sec⁻¹. According to this method, the pigment is ground and oxidized simultaneously. This method has a problem in that oxidation becomes insufficient due to the low solubility of ozone gas in water.

JP-A-2003-226824 discloses a method of oxidizing an organic pigment including dispersing an organic pigment such as carbon black in an aqueous medium and applying ultrasonic radiation to the dispersed pigment so that the pigment has carboxylic acids or salts thereof in an amount of 3 to 10 microequivalents per square meter of the surface of the pigment. However, this method is not sufficient for disentangling the carbon black agglomerate.

### DISCLOSURE OF THE INVENTION

The inventors of the present invention have conducted extensive studies in order to improve the water-dispersibility and the ink performance of carbon black. As a result, the inventors have found that a carbon black aqueous pigment and a carbon black aqueous dispersion which exhibits excellent water-dispersibility and ink performance can be obtained by subjecting carbon black A and carbon black B having specific characteristics to surface oxidation and neutralization, atomizing at least the carbon black A having a higher structure, and mixing the carbon black A and the carbon black B.

The present invention has been conceived based on the above finding. An object of the present invention is to provide a carbon black aqueous pigment which exhibits excellent fixation density, print quality, discharge stability, storage stability, light resistance, and the like when printed on plain paper, specialty paper, an OHP sheet, art paper, or the like, exhibits excellent glossiness when printed on glossy paper while maintaining the degree of blackness when printed on plain paper, and is suitable for an aqueous black ink used for inkjet printers and the like, and a method of producing a carbon black aqueous dispersion in which the carbon black aqueous pigment is dispersed in an aqueous medium.

A carbon black aqueous pigment according to the present invention which achieves the above object comprises carbon black A having a specific surface area by nitrogen adsorption (N₂SA) of 150 m²/g or more, a DBP absorption of 95 cm³/100 g or more, and a tinting strength (Tint) of 120% or more, and carbon black B having a specific surface area by nitrogen adsorption (N₂SA) of less than 150 m²/g, a DBP absorption of less than 95 cm³/100 g, and a tinting strength (Tint) of 120% or more, the carbon black A and the carbon black B being subjected to surface oxidation and neutralization, at least the carbon black A being atomized, and the carbon black A and the carbon black B being mixed in a weight ratio of 20:80 to 80:20.:

A method of producing a carbon black aqueous dispersion according to the present invention comprises providing carbon black A having a specific surface area by nitrogen adsorption (N₂SA) of 150 m²/g or more, a DBP absorption of 95 cm³/100 g or more, and a tinting strength (Tint) of 120% or more, and carbon black B having a specific surface area by nitrogen adsorption (N₂SA) of less than 150 m²/g, a DBP absorption of less than 95 cm³/100 g, and a tinting strength (Tint) of 120% or more, oxidizing the carbon black A and the carbon black B individually in an oxidizing agent aqueous solution, followed by neutralization, atomizing at least the carbon black A, purifying the carbon black A and the carbon black B, mixing the carbon black A and the carbon black B in a weight ratio of 20:80 to 80:20, and dispersing the mixture in an aqueous medium.

According to the present invention, a carbon black aqueous pigment can be provided which can be easily dispersed in water, exhibits excellent dispersibility which allows a stable dispersed state to be maintained for a long period of time, exhibits a high degree of blackness and excellent filterability, exhibits excellent fixation density, discharge stability, storage stability and the like in a well-balanced manner, exhibits excellent glossiness when printed on glossy paper, and is suitable for an aqueous black ink used for an inkjet printer and the like. According to the present invention, a method of producing a carbon black aqueous dispersion in which the carbon black aqueous pigment is dispersed in an aqueous medium can also be provided.

### BRIEF DESCRIPTION OF THE DRAWINGS

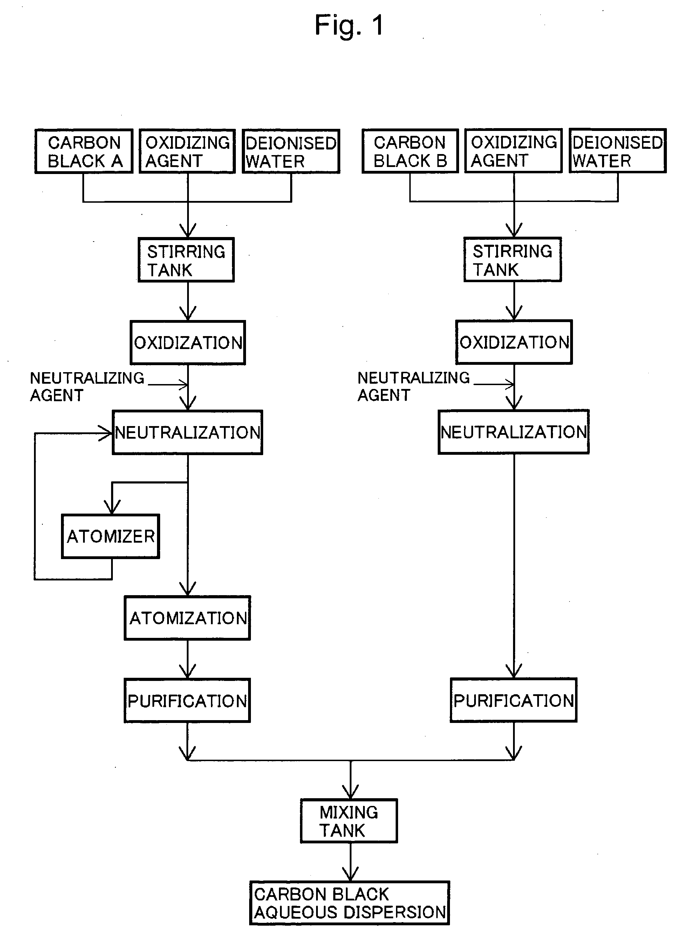

FIG. 1 is a flowchart showing an example of a process of producing a carbon black aqueous dispersion according to the present invention when atomizing only carbon black A without atomizing carbon black B.

### BEST MODE FOR CARRYING OUT THE INVENTION

The carbon black used in the present invention is not particularly limited. Furnace black, channel black, acetylene black, thermal black, or the like may be used.

The specific surface area by nitrogen adsorption (N₂SA) of the carbon black is a characteristic which relates to the area of the contact interface between the surface carbon black particles and water molecules when the carbon black is dispersed in an aqueous medium. The larger the specific surface area by nitrogen adsorption (N₂SA), the larger the area of the contact interface and the higher the water-dispersibility. On the other hand, when used as ink or the like as an aqueous dispersion, fixation density and print density decrease as the specific surface area by nitrogen adsorption (N₂SA) increases. When the specific surface area by nitrogen adsorption (N₂SA) is small, the area of the contact interface with water molecules decreases, whereby water-dispersibility decreases. When the carbon black aqueous dispersion is used as an aqueous ink or the like, filterability and discharge stability decrease.

The DBP absorption of the carbon black is a characteristic which relates to the dimensions of the carbon black aggregates when dispersed in an aqueous medium. When the DBP absorption increases, the carbon black aggregates are likely to be entangled in the aqueous medium, whereby the carbon black tends to precipitate in the carbon black aqueous dispersion. Therefore, precipitates are produced when the carbon black aqueous dispersion is used as an aqueous ink or the like, whereby filterability and discharge stability are impaired. On the other hand, fixation density decreases when the DBP absorption decreases, whereby print density decreases.

The tinting strength (Tint) of the carbon black is a characteristic which relates to the particle diameter (specific surface area), the structure (DBP absorption), the aggregate diameter, and the like of the carbon black. When the tinting strength (Tint) decreases, the particle size distribution becomes broad, whereby filterability and discharge stability decrease when the carbon black aqueous dispersion is used as an aqueous ink. As a result, the carbon black tends to precipitate.

As described above, the characteristics of the carbon black such as the specific surface area by nitrogen adsorption (N₂SA), DBP absorption, and tinting strength (Tint) significantly affect the dispersibility of the carbon black in an aqueous medium and the ink performance when the carbon black aqueous dispersion is used as an aqueous ink. Therefore, the carbon black aqueous pigment according to the present invention utilizes two types of carbon black which differ in these characteristics in combination. Specifically, the carbon black aqueous pigment according to the present invention is prepared by mixing carbon black A having a specific surface area by nitrogen adsorption (N₂SA) of 150 m²/g or more, a DBP absorption of 95 cm³/100 g or more, and a tinting strength (Tint) of 120% or mor, and carbon black B having a specific surface area by nitrogen adsorption (N₂SA) of less than 150 m²/g, a DBP absorption of less than 95 cm³/100 g, and a tinting strength (Tint) of 120% or more.

Examples of the carbon black A include Tokablack #8500, Tokablack #8500F (manufactured by Tokai Carbon Co., Ltd.), #650, #750, MA600 (manufactured by Mitsubishi Chemical Corporation), FW200, FW2V, FWI, FW18PS, Nlpex 180IQ, FW1, Special Black 6, S160, S170 (manufactured by Degussa), Black Pearls 1000M, Black Pearls 800, Black Pearls 880, Monarch 1300, Monarch 700, Monarch 880, CRX1444 (manufactured by Cabot), Raven 7000, Raven 3500, Raven 5250, Raven 5750, Raven 5000 ULTRAII, HV3396 (manufactured by Colombian), DB1305 (manufactured by KOSCO), and the like.

Examples of the carbon black B include Tokablack #7550SB, #7550F (manufactured by Tokai Carbon Co., Ltd.), #44B, #44, #45B, MA7, MA11, #47, #45, #33, #45L, #47, #50, #52, MA77, MA8 (manufactured by Mitsubishi Chemical Corporation), Sunblack 700, 705, 710, 715, 720, 725, X25, X45 (manufactured by Asahi Carbon Co., Ltd.), Regal 330R, Regal 660R, Regal 660, Regal 415R, Regal 415, Black Pearls 4630, Monarch 4630 (manufactured by Cabot), Raven 1255, Raven 1250, Raven 1190, Raven 1000, Raven 1020, Raven 1035, Raven 1100 ULTRA, Raven 1170, Raven 1200 (manufactured by Columbian), and the like.

Note that the present invention is not limited to these products. Carbon black which will be developed in the future may also be used in the present invention. In the present invention, the carbon black A may be used either individually or in combination of two or more. The carbon black B may also be used either individually or in combination of two or more.

The carbon black A and the carbon black B are individually oxidized in order to form hydrophilic acidic groups such as carboxyl groups and hydroxyl groups on the surface of the carbon black particles. The carbon black A and the carbon black B which have been oxidized are individually neutralized.

In the carbon black aqueous dispersion according to the present invention, after subjecting the carbon black A and the carbon black B to surface-oxidization and neutralization, at least the carbon black A having a higher structure and large aggregates must be atomized in order to disentangle the carbon black agglomerates. Specifically, only the carbon black A or both of the carbon black A and the carbon black B may be atomized. It is necessary to atomize at least the carbon black A having a high DBP absorption and large aggregates in order to disentangle the aggregate structure (agglomerates).

The carbon black aqueous pigment according to the present invention is produced by mixing the carbon black A and the carbon black B subjected to oxidization and neutralization in a weight ratio of 20:80 to 80:20 after atomizing at least the carbon black A.

The carbon black aqueous dispersion according to the present invention in which the carbon black aqueous pigment is dispersed in an aqueous medium is produced by oxidizing the carbon black A and the carbon black B in respective oxidizing agent aqueous solutions, followed by neutralization, atomizing at least the carbon black A, purifying the carbon black A and the carbon black B, and mixing the carbon black A and the carbon black B in a weight ratio of 20:80 to 80:20 to disperse the carbon black A and the carbon black B in an aqueous medium.

The production method is described below with reference to a flowchart shown in FIG. 1.

FIG. 1 shows a case where only the carbon black A is atomized without atomizing the carbon black B.

The carbon black A and the carbon black B having the above-mentioned specific surface area by nitrogen adsorption (N₂SA), DBP absorption, and tinting strength (Tint) are individually oxidized by adding the carbon black in an oxidizing agent aqueous solution and mixing the mixture with stirring. As the oxidizing agent, a peroxydiacid (e.g., peroxosulfuric acid, peroxocarbonic acid, or peroxophosphoric acid), a salt thereof, or the like is used. The salt may be a salt of a metal (e.g., lithium, sodium, potassium, or aluminum), an ammonium salt, or the like. Hydrophilic acidic groups may be formed by a diazo coupling reaction. Note that ozone gas cannot efficiently produce hydrophilic acidic groups due to low water-solubility.

In the oxidation process, an aqueous medium (e.g., deionized water) and the oxidizing agent are placed in a stirring tank, and the oxidizing agent is dissolved with stirring. The carbon black is added to the resulting oxidizing agent aqueous solution, and the mixture is stirred to prepare a slurry. Hydrophilic acidic groups such as carboxyl groups and hydroxyl groups are thus produced on the surface of the carbon black particles. The degree of oxidation is adjusted by adjusting the oxidizing agent concentration of the oxidizing agent aqueous solution, the ratio of the carbon black and the oxidizing agent, the temperature during stirring, the stirring speed, the stirring time, and the like.

In this case, the carbon black can be efficiently dispersed in the oxidizing agent aqueous solution and uniformly and effectively oxidized by previously subjecting the carbon black to dry oxidation under a gaseous atmosphere (e.g., ozone, oxygen, NOₓ, or SOₓ) or wet oxidation with ozone water, a hydrogen peroxide aqueous solution, or the like.

It is preferable to add a surfactant to the oxidizing agent aqueous solution so that the carbon black is efficiently oxidized in a slurry. An anionic, nonionic, or cationic surfactant may be used. Examples of the anionic surfactant include a fatty acid salt, an alkyl sulfuric ester salt, and an alkylaryl sulfonate. Examples of the nonionic surfactant include a polyoxyethylene alkyl ether and a polyoxyethylene alkylaryl ether. Examples of the cationic surfactant include an alkylamine salt and a quaternary ammonium salt.

Acidic groups such as carboxyl groups and hydroxyl groups produced on the surface of the carbon black particles by oxidation are then neutralized. As a neutralizing agent, an alkali salt (e.g., potassium hydroxide or sodium hydroxide), ammonia, or an organic amine such as ethanolamine, triethanolamine, dimethylaminoethanol, or a quaternary amine is used. It is preferable to add the neutralizing agent to the slurry provided in a mixing tank, and to stir the mixture at 95 to 105°C for 2 to 5 hours to completely neutralize the acidic groups, for example.

It is preferable to remove reduced salts which have been produced by oxidation and which hinder neutralization before neutralization. Removal of such reduced salts allows neutralization to efficiently proceed and prevents the carbon black from re-aggregating. Reduced salts may be removed using a separation membrane such as an ultrafilter (UF) membrane, a reverse osmosis (RO) membrane, or an electrodialysis membrane.

After neutralization, the slurry of the carbon black A is atomized (i.e., the carbon black agglomerates are atomized). Atomization is performed by spraying the slurry from a nozzle under pressure at high speed so that collision occurs between the sprayed streams or between the sprayed streams and a wall surface. The agglomerates of the carbon black A in the slurry are atomized by collision, a shear force during spraying, and the like.

A commercially-available atomizer such as Microfluidizer (manufactured by Microfluidics Corporation), Ultimizer (manufactured by Sugino Machine Limited), Nanomizer (manufactured by Tokai Corporation), or a high-pressure homogenizer may be used.

The slurry is sprayed from a spray nozzle under a pressure of 50 to 250 MPa, for example. The carbon black agglomerates contained in the slurry are atomized by shearing of the spray streams during spraying, mutual collision, or collision with a wall surface. Atomization is preferably performed until the maximum particle diameter of the agglomerates is reduced to 1 µm or less. The maximum particle diameter of the agglomerates is determined using the following method.

Specifically, the carbon black concentration of the slurry is adjusted to 0.1 to 0.5 kg/cm³. A heterodyne laser Doppler particle size distribution measurement device (manufactured by Microtrac Inc., UPA model 9340) is used for measurement. When a laser beam is applied to particles in Brownian motion in a suspension, the frequency of the scattered light is modulated due to the Doppler effect. The intensity of Brownian motion (i.e., particle diameter) is measured from the degree of frequency modulation. A cumulative frequency distribution curve is created based on the particle diameters of the carbon black agglomerates thus measured. A value at a cumulative frequency of 50% and a value at a cumulative frequency of 99% of the cumulative frequency distribution curve are respectively taken as the average particle diameter (Dupa50% (nm)) and the maximum particle diameter (Dupa99% (nm)) of the carbon black agglomerates.

After atomization, the slurry is purified in order to remove salts produced by neutralization, undispersed carbon black agglomerates, coarse particles, and the like from the slurry. In the purification process, salts are separated and removed using a separation membrane such as an ultrafiltration (UF) membrane, a reverse osmosis (RO) membrane, or an electrodialysis membrane, and undispersed agglomerates and coarse particles are removed by centrifugation, filtration, or the like.

The carbon black B is subjected to oxidization and neutralization in the same manner as the carbon black A to prepare a slurry of the carbon black B. The slurry of the carbon black B is purified without atomizing the carbon black B.

The carbon black A and the carbon black B thus obtained are mixed in a weight ratio of 20:80 to 80:20. The mixture is then dispersed in an aqueous medium such as deionized water to produce a carbon black aqueous dispersion according to the present invention. Since the slurry of the carbon black A and the slurry of the carbon black B are mixed after purification, aggregation and gelling of the mixed slurry can be prevented.

When using the above carbon black aqueous dispersion as a black ink, the carbon black dispersion concentration is adjusted to 0.1 to 20 wt% suitable for a black ink by removing or adding the aqueous medium, for example. Commonly ink additives such as an antiseptic agent, a viscosity regulator, and a resin are added to the mixture to obtain a carbon black aqueous dispersion which exhibits excellent dispersibility and ink performance, and is suitably used as an aqueous black ink used for inkjet printers and the like.

The present invention is described below by way of examples and comparative examples. Note that the following examples illustrate one aspect of the present invention. The present invention is not limited to the following examples.

### Example 1

Carbon black A and carbon black B having characteristics shown in Table 1 were used.

**TABLE 1**

| | A | B |
|---|---|---|
| N₂SA(m²/g) | 290 | 135 |
| DBP (cm³/100 g) | 98 | 56 |
| Tint (%) | 156 | 145 |

| | | |
|---|---|---|
| Carbon black A: Tokablack #8500 (manufactured by Tokai Carbon Co., Ltd.) Carbon black B: Tokablack #7550F (manufactured by Tokai Carbon Co., Ltd.) | | |

The carbon black A and the carbon black B were individually oxidized using the following method.

A stirring tank was charged with 3000 ml of 2.0N sodium peroxodisulfate (oxidizing agent aqueous solution) and 150 g of the carbon black. The carbon black was oxidized with stirring to prepare a carbon black slurry. The carbon black was oxidized at 60°C for 10 hours at a stirring speed of 300 rpm.

The carbon black was filtered out from the slurry after oxidation, and was neutralized with sodium hydroxide. The resulting product was placed in a stirring tank, and then stirred at 100°C for three hours to stabilize alkalis.

The slurry A of the carbon black A subjected to oxidation and neutralization was subjected to atomization using the following method.

An Ultimaizer (manufactured by Sugino Machine Limited) was used as an atomizer. The slurry A was supplied to the Ultimaizer, and sprayed under a pressure of 245 MPa to cause collision between the sprayed streams. The slurry after collision was cooled with stirring in a stirring tank, and again supplied to the Ultimizer. This operation was repeated 10 times.

The slurry A subjected to atomization and the slurry B of the carbon black B which was subjected to oxidation and neutralization but was not subjected to atomization were individually purified and concentrated by removing salts from the slurry using an ultrafiltration membrane (AHV-1010 manufactured by Asahi Kasei Corporation) to a carbon black concentration of 20 wt% and an electrical conductivity of 1.02 mS/cm.

The resulting carbon black slurry A and carbon black slurry B were mixed in a different weight ratio to produce a carbon black aqueous dispersion.

### Comparative Example 1

A slurry of the carbon black A and a slurry of the carbon black B were prepared in the same manner as in Example 1 except that the slurry A of the carbon black A was not subjected to atomization. The resulting slurry of the carbon black A and the slurry of the carbon black B were mixed to produce a carbon black aqueous dispersion.

### Comparative Example 2

The carbon black A and the carbon black B were mixed in advance in a different weight ratio, and then subjected to oxidation, neutralization, and purification in the same manner as in Example 1 to produce a carbon black aqueous dispersion.

The water-dispersibility and the ink performance of the carbon black aqueous dispersion thus produced were evaluated by measuring the viscosity, the particle diameter of the carbon black agglomerates, filterability, print density, and the like using the following methods. The results are shown in Table 2.
Viscosity: A sample was placed in an airtight container, and allowed to stand at 70°C. The viscosity of the sample was measured after 1 to 4 weeks using a rotational vibration type viscometer (VM-100-L manufactured by Yamaichi Electronics Co., Ltd.).
Particle diameter of carbon black agglomerates: The particle diameters of the carbon black agglomerates were measured for each sample of which the viscosity was measured using a heterodyne laser Doppler particle size distribution measurement device (UPA model 9340 manufactured by Microtrac Inc.), and a cumulative frequency distribution curve was created. The value corresponding to a cumulative percentage of 99% was determined to be the maximum particle diameter (Dupa99%) of the carbon black agglomerates, and the value corresponding to a cumulative percentage of 50% was determined to be the average particle diameter (Dupa50%) of the carbon black agglomerates.
Filterability: A filtration test was conducted in which 200 g of the sample was filtered using a No. 2 filter paper (diameter: 90 phi) or a filter having a pore size of 3 µm, 0.8 µm, 0.65 µm, or 0.45 µm under a reduced pressure of 2666.4 Pa. The amount of the sample filtered was measured.
Print density: An ink was prepared according to the formulation shown in Table 3. The ink was filtered through a membrane filter having a pore size of 0.8 µm. A cartridge for an inkjet printer (EM-930C manufactured by Seiko Epson Corporation) was charged with the ink. A printing test was carried out as follows. Plain paper (Xerox 4024) and matte glossy paper (RM-1GP01 manufactured by Ricoh Company, Ltd.) were used. The print density (reflective optical density) on the plain paper was measured using a Macbeth densitometer (RD-927 manufactured by Kollmorgen Instruments Corporation). Glossiness on the matte glossy paper was measured using a glossmeter (reflection angle: 60°) (manufactured by BYK Gardner).

**TABLE 2**

| Run No. | Example | | | Comparative Example 1 | | | Comparative Example 2 | | |
|---|---|---|---|---|---|---|---|---|---|
| | 1 | 2 | 3 | 1 | 2 | 3 | 1 | 2 | 3 |
| Carbon black | | | | | | | | | |
| A (part by weight) | 70 | 50 | 30 | 70 | 50 | 30 | 70 | 50 | 30 |
| B (part by weight) | 30 | 50 | 70 | 30 | 50 | 70 | 30 | 50 | 70 |

| Viscosity (mPa.s) | | | | | | | | | |
|---|---|---|---|---|---|---|---|---|---|
| Initial | 4.16 | 3.62 | 3.38 | 4.89 | 4.25 | 3.98 | 3.42 | 2.98 | 2.79 |
| After four weeks | 3.72 | 2.93 | 3.14 | 4.38 | 3.44 | 3.68 | 3.07 | 2.41 | 2.60 |

| Particle diameter of agglomerates (nm) | | | | | | | | | |
|---|---|---|---|---|---|---|---|---|---|
| Initial | 72.0 | 72.3 | 62.8 | 78.0 | 77.8 | 68.5 | 66.0 | 66.8 | 57.1 |
| After four weeks | 70.1 | 69.8 | 59.5 | 75.6 | 60.8 | 64.2 | 64.5 | 51.4 | 54.8 |

| Maximum particle diameter of agglomerates (nm) | | | | | | | | | |
|---|---|---|---|---|---|---|---|---|---|
| Initial | 226 | 206 | 196 | 231 | 211 | 201 | 220 | 201 | 190 |
| After four weeks | 229 | 200 | 187 | 239 | 205 | 192 | 219 | 194 | 182 |

| Filterability (%) | | | | | | | | | |
|---|---|---|---|---|---|---|---|---|---|
| No.2 filter paper | 200 | 200 | 200 | 200 | 200 | 200 | 200 | 200 | 200 |
| Diameter 3 µm | 200 | 200 | 200 | 200 | 200 | 200 | 200 | 200 | 200 |
| Diameter 0.8 µm | 200 | 200 | 200 | 200 | 200 | 200 | 200 | 200 | 200 |
| Diameter 0.65 µm | 200 | 200 | 200 | 200 | 200 | 200 | 200 | 200 | 200 |
| Diameter 0.45 µm | 18.8 | 20.5 | 22.1 | 16.7 | 18.8 | 17.8 | 19.0 | 21.5 | 24.8 |
| Print density (OD value) | 1.42 | 1.40 | 1.38 | 1.40 | 1.36 | 1.34 | 1.38 | 1.34 | 1.32 |
| Glossiness (%) | 19 | 21 | 23 | 16 | 19 | 20 | 18 | 20 | 21 |
| Precipitate residual rate (%) | 16.7 | 15.0 | 14.0 | 16.9 | 15.2 | 14.0 | 16.8 | 15.1 | 13.9 |

**TABLE 3**

| | |
|---|---|
| CB aqueous dispersion (concentration: 15 wt%) | 33 wt% |
| Glycerol | 5 wt% |
| Diethylene glycol | 15 wt% |
| 2-Pyrrolidone | 2 wt% |
| Buffer^{*1} | 0.5 wt% |
| Surfactant^{*2} | 0.1 wt% |
| Distilled water | 4.4 wt% |
| Total | 100 wt% |

| | |
|---|---|
| ^{*1} 3-[1,1-dimethyl-2-hydroxyethyl]amino]-2-hydroxypropanesulfonic acid ^{*2} C₁₂H₂₅O-(C₂H₄O)₃SO₃Na | |

As shown in Table 2, the carbon black aqueous dispersions according to the present invention (examples) exhibited well-balanced glossiness on glossy paper and degree of blackness on plain paper as compared with the carbon black aqueous dispersions according to Comparative Examples 1 and 2.

## Claims

1. A carbon black aqueous pigment comprising carbon black A having a specific surface area by nitrogen adsorption (N₂SA) of 150 m²/g or more, a DBP absorption of 95 cm³/100 g or more, and a tinting strength (Tint) of 120% or more, and carbon black B having a specific surface area by nitrogen adsorption (N₂SA) of less than 150 m²/g, a DBP absorption of less than 95 cm³/100 g, and a tinting strength (Tint) of 120% or more, the carbon black A and the carbon black B being subjected to surface oxidation and neutralization, at least the carbon black A being atomized, and the carbon black A and the carbon black B being mixed in a weight ratio of 20:80 to 80:20.

2. A method of producing a carbon black aqueous dispersion comprising providing carbon black A having a specific surface area by nitrogen adsorption (N₂SA) of 150 m²/g or more, a DBP absorption of 95 cm³/100 g or more, and a tinting strength (Tint) of 120% or more, and carbon black B having a specific surface area by nitrogen adsorption (N₂SA) of less than 150 m²/g, a DBP absorption of less than 95 cm³/100 g, and a tinting strength (Tint) of 120% or more, oxidizing the carbon black A and the carbon black B individually in an oxidizing agent aqueous solution, followed by neutralization, atomizing at least the carbon black A, purifying the carbon black A and the carbon black B, mixing the carbon black A and the carbon black B in a weight ratio of 20:80 to 80:20, and dispersing the mixture in an aqueous medium.
